# EUROPEAN PATENT SPECIFICATION

(11) **EP 0 574 258 B1**
(45) Date of publication and mention of the grant of the patent: **14.01.1998**
(21) Application number: 93304502.3
(22) Date of filing: 10.06.1993
(51) Int. Cl.: C08F 4/635, C08F 10/00

(54) **Process for producing alpha-olefin polymers**
Verfahren zur Herstellung von Alpha-Olefinpolymeren
Procédé de préparation de polymères d'alpha-oléfine

(30) Priority: 11.06.1992 JP 152424/92
(43) Date of publication of application: 15.12.1993
(73) Proprietor: MITSUBISHI CHEMICAL CORPORATION, Chiyoda-ku, Tokyo-to (JP)
(72) Inventor: Fujita, Takashi, c/o Mitsubishi Petrochem. Co., Yokkaichi-Shi, Mie-Ken (JP); Sugano, Toshihiko, c/o Mitsubishi Petrochem. Co., Yokkaichi-Shi, Mie-Ken (JP)
(74) Representative: Kyle, Diana

(56) References cited:
- EP-A- 0 418 044
- EP-A- 0 427 697
- EP-A- 0 436 399
- WO-A-91/14713
- WO-A-92/00333
- DIE MAKROMOLEKULARE CHEMIE, RAPID COMMUNICATIONS vol. 13, no. 5 , May 1992 , BASEL pages 277 - 281 XP266808 C. PELLECHIA, A. PROTO, P. LONGO, A. ZAMBELLI 'Polymerization of ethylene and propene in the presence of titanium and zirconium activated with tris(pentafluorophenyl)boron'

## Description

### BACKGROUND OF THE INVENTION

The present invention relates to a process for producing α-olefin polymers. More particularly, the present invention relates to a process for producing an α-olefin polymer by the use of a novel catalyst component, whereby an alumoxane is used as an organoaluminum component but its amount is reduced.

### Related Art

Processes for producing an α-olefin polymer in a high yield by the use of a catalyst comprising a metallocene of the IVB group in the Periodic Table and an alumoxane are known in the art (Japanese Patent Laid-Open Publication Nos. 19503/1983 and 35007/1985). These proposed processes successfully produce polymers in a high yield per transition metal used and a narrow molecular weight distribution.

Polypropylene having stereoregularity is also produced successfully by the use of a particular metallocene compound (Japanese Patent Laid-Open Publication Nos. 130314/1986, 295607/1988, 275609/1989, 301704/1989, 41303/1990 and 274703/1990). While these methods have realized the production of polymers having industrially useful properties, it may be thought that these methods have some industrial problems such as high production cost and contamination of the olefin polymer produced with a large amount of aluminum because of the very high cost of methylalumoxane used as a co-catalyst and low activity of the catalyst per aluminum, thus generally requiring a large amount of the methylalumoxane.

A variety of methods have been proposed for the purpose of solving these problems (Japanese Patent Laid-Open Publication Nos. 211307/1986, 130601/1988, 16803/1989, 22308/1990 and 167307/1990). These proposals have successfully improved the activity of the catalyst per aluminum to some extent. The alumoxane may, however, have disadvantages such as poor solubility in a polymerization solvent such as a hydrocarbon, complicated handling and difficulty of removing the aluminum from the polymer produced and may thus cause the lowering of the quality and the deterioration of the color of olefin polymers obtained. Thus it seems that further improvement is necessary.

Alternative proposals such as the methods where methylalumoxane is used in combination with another organoaluminum compound and the like have been disclosed (Japanese Patent Laid-Open Publication Nos. 260602/1985, 130604/1985, 89506/1988, 178108/1988, 218707/1988, 9206/1989, 315407/1989, 22306/1990 and 167310/1990). These methods, which have successfully decreased the amount of the methylalumoxane used, may still suffer from insufficient activity of the catalysts per aluminum, and further improvement may thus desired.

On the other hand, methods where a transition metal component of a catalyst is activated without the use of methylalumoxane have been proposed (Japanese Patent Laid-Open Publication of PCT Nos. 501950/1989, and 502036/1989, Japanese Patent Laid-Open Publication Nos. 207703/1991, 207704/1991, 179005/1991, 197513/1991 and 197514/1991). These proposals, which have successfully eliminated the use of methylalumoxane, may bring about intensive decrease of the activity of the catalyst per a transition metal used. Thus still further improvements may be desired.

WO 91/14713 relates to a metallocene polymerization catalyst system of enhanced productivity which does not require an alumoxane activator. WO 91/14713 does not disclose the preparation of a preliminary prepared contact product of the metallocene catalyst components and a specific organoaluminum compound which is an essential feature of the present invention.

The problem to be solved by the present invention is to provide a process for preparing an α-olefin polymer having good quality wherein methylalumoxane is used but in a reduced amount, as a co-catalyst without lowering the activity per a metallocene compound used.

### SUMMARY OF THE INVENTION

The present invention has been achieved as a result of investigation for the purpose of solving the aforestated problem.

The present invention provides a process for producing an α-olefin polymer comprising subjecting an α-olefin to contact, in a polymerization vessel, with a catalyst which comprises the following components (A) and (B) thereby polymerizing it:
Component (A) which is a contact product of the following Sub-components (i), (ii), and (iii):
   Sub-component (i) which is a transition metal compound represented by the general formula:

   Qₐ(C₅H_{5-a-b}R¹ _{b}) (C₅H_{5-a-c}R² _{c})MeXY

   or

   A_{d}(C₅H_{5-d-e}R³ ₑ) (R⁴ _{2-d}J)MeXY,

   wherein: each of (C₅H_{5-a-b}R¹_{b}), (C₅H_{5-a-c}R² _{c}) and (C₅H_{5-d-e}R³ ₑ), represents a conjugated five-membered ring ligand which coordinates with a metal Me, in which R¹, R² and R³ represent, respectively, a monovalent group selected from the group consisting of a hydrocarbyl group having 1-20 carbon atoms, a halogen atom, an alkoxy group having 1-12 carbon atoms, a silicon-containing hydrocarbyl group having 1-24 carbon atoms, a phophorus-containing hydrocarbyl group having 1-18 carbon atoms, a nitrogen-containing hydrocarbyl group having 1-18 carbon atoms and a boron-containing hydrocarbyl group having 1-18 carbon atoms, R⁴ represents a monovalent group consisting of a hydrocarbyl group having 1-20 carbon atoms, a silicon-containing hydrocarbyl group having 1-24 carbon atoms and an oxygen-containing hydrocarbyl group having 1-20 carbon atoms, wherein R¹ and R² may be the same or different, or R¹s, if present in plurality, may be the same or different or may or may not be bonded at their free terminus, and R² (or R³), if present in plurality, may be the same or different or may or may not be bonded together at their free terminus; Q represents a divalent bridge group which crosslinks the two conjugated five-membered ring ligands indicated; A represents a divalent bridge group which crosslinks the groups indicated, viz. (C₅H_{5-d-e}R³ₑ) and (R⁴_{2-d}J), in which J represents a nitrogen or phosphorus atom which bonds to Me; Me represents a transition metal of the IVB-VIB group in the Periodic Table; each of X and Y, which may be the same or different, represents a monovalent group consisting of a hydrogen atom, a halogen atom, a hydrocarbyl group having 1-20 atoms, an alkoxy group having 1-20 carbon atoms, an amino group which may or may not be substituted with up to two hydrocarbyl groups having 1-20 carbon atoms, a phosphorus-containing hydrocarbyl group having 1-20 carbon atoms and a silicon-containing hydrocarbyl group having 1-20 carbon atoms; a and d denote 0 or 1; b and c denote integers defined as 0 ≤ b ≤ 5 and 0 ≤ c ≤ 5, respectively, when a denotes 0, and b and c denote integers defined as 0 ≤ b ≤ 4 and 0 ≤ c ≤ 4, respectively, when a denotes 1; e denotes an integer defined as 0 ≤ e ≤ 5 when d denotes 0 and an integer defined as 0 ≤ e ≤ 4 when d denotes 1;
   Sub-component (ii) which is a Lewis acid; and
   Sub-component (iii) which is an organoaluminum compound; and
Component (B) which is an alumoxane, the contact of Sub-components (i), (ii) and (iii) being conducted in another vessel than the polymerization vessel to form Component (A), which is then fed to the polymerization vessel where it is contacted with Component (B) to form the catalyst.

A meritorious effect according to the present invention has made it possible to decrease extensively the amount used of an alumoxane (Component (B)) by conducting the polymerization of an olefin with the use of a catalyst which comprises an alumoxane, Component (B), combined with a preliminary contact product, Component (A), having active sites formed efficiently and stably by preliminarily contacting the Sub-components (i), (ii) and (iii) with each other under prescribed conditions.

The mechanism which brings about such effects in the practice of this invention has not yet been sufficiently elucidated. It is, however, our assumption at present that in the prior art an active species of a metallocene compound as a transition metal component of a catalyst, such as Sub-component (i) in the present invention, which is asserted to be a metallocene cation species in another view may practically be formed when an alumoxane such as Component (B) is contacted therewith, but the active species thus formed may disappear immediately due to the fact that the formation of the active species is based on a reversible reaction, so that a large amount of an alumoxane is required for obtaining at least a prescribed amount of the active species; and that in the present invention, on the other hand, the disappearance of the active species is suppressed and the active species is formed stoichiometrically by contacting the components (i), (ii) and (iii) of the present invention under specified conditions, whereby it is sufficient to use the alumoxane only in an amount for preventing intoxication of and stabilizing the active species formed. Thus, it is considered that the amount of the alumoxane can be reduced. It is understood that such effects would not be expected on the basis of the prior art. It should, however, be understood that the present invention is not to be limited by such assumptions or speculations.

### DETAILED DESCRIPTION OF THE INVENTION

The process for producing an α-olefin of the present invention comprises polymerizing an olefin with the use of a polymerization catalyst comprising the components (A) and (B). In this connection, the phraseology "comprising the components (A) and (B)" does not exclude the co-existence of any third component as long as it does not deteriorate the effects of the components (A) and (B).

### Component (A)

The Component (A) is a contact product of the Sub-components (i), (ii) and (iii).

### Sub-component (i)

Sub-component (i) is a transition metal compound represented by the general formula:

Qₐ(C₅H_{5-a-b}R¹ _{b})(C₅H_{5-a-c}R² _{c})MeXY

or

A_{d}(C₅H_{5-d-e}R³ ₑ)(R⁴ _{2-d}J)MeXY,

wherein (C₅H_{5-a-b}R¹_{b}), (C₅H_{5-a-c}R²_{c}) and (C₅H_{5-d-e}R³ₑ), respectively, represent a conjugated five-membered ring ligand which coordinates with a metal Me, in which R¹, R² and R³ represent, respectively, a monovalent group selected from the group consisting of a hydrocarbyl group having 1-20 carbon atoms, a halogen atom, an alkoxy group having 1-12 carbon atoms, a silicon-containing hydrocarbyl group having 1-24 carbon atoms, a phosphorus-containing hydrocarbyl group having 1-18 carbon atoms, a nitrogen-containing hydrocarbyl group having 1-18 carbon atoms and a boron-containing hydrocarbyl group having 1-18 carbon atoms, R⁴ represents a monovalent group selected from the group consisting of a hydrocarbyl group having 1-20 carbon atoms, a silicon-containing hydrocarbyl group having 1-24 carbon atoms and an oxygen-containing hydrocarbyl group having 1-20 carbon atoms, wherein R¹ and R² may be the same or different, or R¹s, if present in plurality, may be the same or different or may or may not be bonded at their free terminus, and R² (or R³) , if present in plurality, may be the same or different or may or may not be bonded together at their free terminus;
Q represents a divalent bridge group which crosslinks the two conjugated five-membered ring ligands indicated;
A represents a divalent bridge group which crosslinks the groups indicated, viz. (C₅H_{5-d-e}R³ₑ) and (R⁴_{2-d}J), in which J represents a nitrogen or phosphorus atom which bonds to Me;
Me represents a transition metal of the IVB-VIB group in the Periodic Table;
X and Y, which may be the same or different, each represents a monovalent group consisting of a hydrogen atom, a halogen atom, a hydrocarbyl group having 1-20 atoms, an alkoxy group having 1-20 carbon atoms, an amino group which may or may not be substituted with up to two hydrocarbyl group having 1-20 carbon atoms, a phosphorus-containing hydrocarbyl group having 1-20 carbon atoms and a silicon-containing hydrocarbyl group having 1-20 carbon atoms, respectively;
a and d denote 0 or 1;
b and c denote integers defined as 0 ≤ b ≤ 5 and 0 ≤ c ≤ 5, respectively, when a denotes 0, and b and c denote integers defined as 0 ≤ b ≤ 4 and 0 ≤ c ≤ 4, respectively, when a denotes 1;
e denotes an integer defined as 0 ≤ e ≤ 5 when d denotes 0 and an integer defined as 0 ≤ e ≤ 4 when d denotes 1.

Here, Q represents a divalent bridge or bonding group which crosslinks the two conjugated five-membered ring ligands indicated, and A represents a bonding group which crosslinks the two groups indicated, viz. one which is a conjugated five-membered ring ligand indicated and the group (R⁴_{2-d}J). More particularly, the bridge groups include (a) an alkylene group such as a methylene group, an ethylene group, an isopropylene group, a phenylmethylmethylene group, diphenylmethylene group, and a cyclohexylene group; (b) a silylene group such as a silylene group, a dimethylsilylene group, a phenylmethylsilylene group, a diphenylsilylene group, a disilylene group, tetramethyldisilylene group; (c) a hydrocarbyl group containing germanium, phosphorus, nitrogen, boron or aluminum, such as those groups e.g. (CH₃)₂Ge, (C₆H₅)₂Ge, (CH₃)P, (C₆H₅)P, (C₄H₉)N, (C₆H₅)N, (CH₃)B, (C₄H₉)B, (C₆H₅)B, (C₆H₅)Al, (CH₃O)Al; and the like.

Preferably the bridge group is an alkylene group and a silylene group where the number of atoms, C or Si, in the shortest chain of the bridge may be up to 3, preferably 1 to 2; a and d denotes 0 or 1. In stereoregular polymerization such as polymerization of propylene, it is preferable that a is 1 or d is 1, or more preferably a is 1.

While in the aforementioned formulae the conjugated five-membered ring ligands represented by (C₅H_{5-a-b}R¹_{b}), (C₅H_{5-a-c}R²_{c}) and (C₅H_{5-d-e}R³ₑ) are separately defined, a and d, b, c and e, and R¹, R² and R³ have the same meaning among those five-membered groups, respectively (as will be described later in detail), so that it is needless to say that these three conjugated five-membered ring groups may be the same or different.

A specific example of the conjugated five-membered ring groups is the one wherein b = 0 (or c = 0 and e = 0), i.e., a cyclopentadienyl group (having no substituent other than the crosslinking groups Q or A). In the case of the conjugated five-membered ring groups having a substituent, i.e. b ≠ 0 (or c ≠ 0 or e ≠ 0); a specific example of R¹ (or R² or R³) is a hydrocarbyl group having 1 to 20 carbon atoms, preferably 1 to 12 carbon atoms. The hydrocarbyl group may be bonded as a monovalent group to the cyclopentadienyl group, or when R¹ (or R² or R³) is present in plurality among the hydrocarbyl groups may or may not be bonded at their free terminus, namely the opposite end to the end at which it bonds to the cyclopentadienyl group, to form a ring sharing some of the carbon atoms of the cyclopentadienyl group. A typical example of the latter is one in which two of R¹ (or R² or R³) share a double bond in the cyclopentadienyl group and form a fused six-membered ring, i.e., one in which the conjugated five-membered ring groups is an indenyl group, a tetrahydroindenyl group or a fluorenyl group. In other words, typical examples of the conjugated five-membered ring groups are, substituted or non-substituted, cyclopentadienyl, indenyl, tetrahydroindenyl and fluorenyl groups.

R¹, R² and R³, respectively, include, in addition to the above-described hydrocarbyl group having 1 to 20 carbon atoms, preferably 1 to 12 carbon atoms, a halogen atom such as fluorine, chlorine or bromine atom, an alkoxy group such as one having 1 to 12 carbon atoms, a silicon-containing hydrocarbyl group such as one which contains a silicon atom in the form of -Si(R)(R)(R) and has 1 to 24 carbon atoms, a phosphorus-containing hydrocarbyl group such as one which contains phosphorus atom in the form of -P(R)(R) and has 1 to about 18 carbon atoms, a nitrogen-containing hydrocarbyl group such as one which contains nitrogen atom in the form of -N(R)(R) and has 1 to about 18 carbon atoms, and a boron-containing hydrocarbyl group such as one which contains boron atom in the form of -B(R)(R) and has 1 to about 18 carbon atoms. When b (or c) is at least 2 and R¹ (or R² or R³) is present in plurality, these groups may be the same or different. R⁴ is preferably a monovalent hydrocarbyl group of 1 to 20, preferably 1 to 12, carbon atoms.

b and c denote an integer defined as 0 ≤ b ≤ 5 and 0 ≤ c ≤ 5, respectively, when a denotes 0, and b and c denote integers defined as 0 ≤ b ≤ 4 and 0 ≤ c ≤ 4, respectively, when a denotes 1; e denotes an integer defined as 0 ≤ e ≤ 5 when d denotes 0 and an integer defined as 0 ≤ e ≤ 4 when d denotes 1.

J is a nitrogen atom or a phosphorus atom which bonds to Me, a nitrogen atom being preferable.

In view of the above, preferable examples of the conjugated five-membered ring ligand of the formulae: (C₅H_{5-a-b}R¹_{b}), (C₅H_{5-a-c}R²_{c}) and (C₅H_{5-d-e}R³ₑ) include cyclopentadienyl group, indenyl group, tetrahydroindenyl group, fluorenyl group, and these groups substituted with a lower, such as, e.g. C₁ to C₄, alkyl group, and preferable examples of the group of the formula: (R⁴_{2-d}J) include an alkylamino group having 1 to 20, preferably 1 to 12, carbon atoms.

Me is a transition metal of the IVB-VIB group in the Periodic Table, preferably titanium, zirconium or hafnium. Titanium and zirconium are more preferable, zirconium being still more preferable.

X and Y, respectively, include a hydrogen atom; a halogen atom; a hydrocarbyl group having 1 to 20, preferably 1 to 10 carbon atoms, more preferably 1 to 4 carbon atoms; an alkoxy group having 1 to 20, preferably 1 to 10 carbon atoms, more preferably 1 to 4 carbon atoms; an amino group; an alkylamino group having 1 to 20, preferably 1 to 12 carbon atoms, more preferably 1 to 4 carbon atoms; a phosphorus-containing hydrocarbyl group having 1 to 20, preferably 1 to 12 carbon atoms such as specifically a diphenylphosphine group; and a silicon-containing hydrocarbyl group having 1 to 20, preferably 1 to 12 carbon atoms such as specifically a trimethylsilyl group. X and Y may be the same or different. Among these groups, the halogen groups and the hydrocarbyl groups are preferred.

Specific examples of the transition metal compound in which Me is zirconium are specified as follows.
(a) Transition metal compounds containing two five-membered ring ligands having no bridge group such as:
   (1) bis(cyclopentadienyl)zirconium dichloride,
   (2) bis(methylcyclopentadienyl)zirconium dichloride,
   (3) bis(dimethylcyclopentadienyl)zirconium dichloride,
   (4) bis(trimethylcyclopentadienyl)zirconium dichloride,
   (5) bis(tetramethylcyclopentadienyl)zirconium dichloride,
   (6) bis(pentamethylcyclopentadienyl)zirconium dichloride,
   (7) bis(indenyl)zirconium dimethyl,
   (8) bis(fluorenyl)zirconium dichloride,
   (9) bis(cyclopentadienyl)zirconium monochloride monohydride,
   (10) bis(cyclopentadienyl)methylzirconium monochloride,
   (11) bis(cyclopentadienyl)ethylzirconium monochloride,
   (12) bis(cyclopentadienyl)phenylzirconium monochloride,
   (13) bis(cyclopentadienyl)zirconium dimethyl,
   (14) bis(cyclopentadienyl)zirconium diphenyl,
   (15) bis(cyclopentadienyl)zirconium dineopentyl,
   (16) bis(cyclopentadienyl)zirconium dihydride,
   (17) (cyclopentadienyl)(indenyl)zirconium dichloride, and
   (18) (cyclopentadienyl)(fluorenyl)zirconium dichloride.
(b) Transition metal compounds containing two five-membered ring ligands crosslinked with an alkylene group such as:
   (1) methylenebis(indenyl)zirconium dichloride,
   (2) ethylenebis(indenyl)zirconium dichloride,
   (3) ethylenebis(indenyl)zirconium monohydride monochloride,
   (4) ethylenebis(indenyl)methylzirconium monochloride,
   (5) ethylenebis(indenyl)zirconium monomethoxymonochloride,
   (6) ethylenebis(indenyl)zirconium diethoxide,
   (7) ethylenebis(indenyl)zirconium dimethyl,
   (8) ethylenebis(4,5,6,7-tetrahydroindenyl)zirconium dichloride,
   (9) ethylenebis(2-methylindenyl)zirconium dichloride,
   (10) ethylenebis(2,4-dimethylcyclopentadienyl)(3',5'-dimethylcyclopentadienyl)zirconium dichloride,
   (11) ethylene(2-methyl-4-tert-butylcyclopentadienyl)(3'-tert-butyl-5'-methylcyclopentadienyl)zirconium dichloride,
   (12) ethylene(2,3,5-trimethylcyclopentadienyl)(2',4',5'-trimethylcyclopentadienyl)zirconium dichloride,
   (13) isopropylidenebis(indenyl)zirconium dichloride,
   (14) isopropylidenebis(2,4-dimethylcyclopentadienyl)-(3',5'-dimethylcyclopentadienyl)zirconium dichloride,
   (15) isopropylidenebis(2-methyl-4-tert-butylcyclopentadienyl)(3'-tert-butyl-5'-methylcyclopentadienyl)zirconium dichloride,
   (16) methylene(cyclopentadienyl)(3,4-dimethylcyclopentadienyl)zirconium dichloride,
   (17) methylene(cyclopentadienyl)(3,4-dimethylcyclopentadienyl)zirconium chloride hydride,
   (18) methylene(cyclopentadienyl)(3,4-dimethylcyclopentadienyl)zirconium dimethyl,
   (19) methylene(cyclopentadienyl)(3,4-dimethylcyclopentadienyl)zirconium diphenyl,
   (20) methylene(cyclopentadienyl)(trimethylcyclopentadienyl)zirconium dichloride,
   (21) methylene(cyclopentadienyl)(tetramethylcyclopentadienyl)zirconium dichloride,
   (22) isopropylidene(cyclopentadienyl)(3,4-dimethylcyclopentadienyl)zirconium dichloride,
   (23) isopropylidene(cyclopentadienyl)(2,3,4,5-tetramethylcyclopentadienyl)zirconium dichloride,
   (24) isopropylidene(cyclopentadienyl)(3-methylindenyl)zirconium dichloride,
   (25) isopropylidene(cyclopentadienyl)(fluorenyl)zirconium dichloride,
   (26) isopropylidene(2-methylcyclopentadienyl)(fluorenyl)zirconium dichloride,
   (27) isopropylidene(2,5-dimethylcyclopentadienyl)(3',4'-dimethylcyclopentadienyl)zirconium dichloride,
   (28) isopropylidene(2,5-dimethylcyclopentadienyl)(fluorenyl)zirconium dichloride,
   (29) ethylene(cyclopentadienyl)(3,5-dimethylcyclopentadienyl)zirconium dichloride,
   (30) ethylene(cyclopentadienyl)(fluorenyl)zirconium dichloride,
   (31) ethylene(2,5-dimethylcyclopentadienyl)(fluorenyl)zirconium dichloride,
   (32) ethylene(2,5-diethylcyclopentadienyl)(fluorenyl)zirconium dichloride,
   (33) diphenylmethylene(cyclopentadienyl)(3,4-diethylcyclopentadienyl)zirconium dichloride,
   (34) diphenylmethylene(cyclopentadienyl)(3,4-diethylcyclopentadienyl)zirconium dichloride,
   (35) cyclohexylidene(cyclopentadienyl)(fluorenyl)zirconium dichloride, and
   (36) cyclohexylidene(2,5-dimethylcyclopentadienyl)(3',4'-dimethylcyclopentadienyl)zirconium dichloride.
(c) Transition metal compounds containing two five-membered ring ligands crosslinked with a silylene group:
   (1) dimethylsilylenebis(indenyl)zirconium dichloride,
   (2) dimethylsilylene(4,5,6,7-tetrahydroindenyl)zirconium dichloride,
   (3) dimethylsilylene(2-methylindenyl)zirconium dichloride,
   (4) dimethylsilylenebis(2,4-dimethylindenyl)zirconium dichloride,
   (5) dimethylsilylene(2,4-dimethylcyclopentadienyl)(3',5'-dimethylcyclopentadienyl)zirconium dichloride,
   (6) phenylmethylsilylenebis(indenyl)zirconium dichloride,
   (7) phenylmethylsilylenebis(4,5,6,7-tetrahydroindenyl)zirconium dichloride,
   (8) phenylmethylsilylenebis(2,4-dimethylcyclopentadienyl)(3',5'-dimethylcyclopentadienyl)zirconium dichloride,
   (9) phenylmethylsilylene(2,3,5-trimethylcyclopentadienyl)(2',4',5'-trimethylcyclopentadienyl)zirconium dichloride,
   (10) phenylmethylsilylenebis(tetramethylcyclopentadienyl)zirconium dichloride,
   (11) diphenylsilylenebis(indenyl)zirconium dichloride,
   (12) tetramethyldisilylenebis(indenyl)zirconium dichloride,
   (13) tetramethyldisilylenebis(cyclopentadienyl)zirconium dichloride,
   (14) tetramethyldisilylene(3-methylcyclopentadienyl)(indenyl)zirconium dichloride,
   (15) dimethylsilylene(cyclopentadienyl)(3,4-dimethylcyclopentadienyl)zirconium dichloride,
   (16) dimethylsilylene(cyclopentadienyl)(trimethylcyclopentadienyl)zirconium dichloride,
   (17) dimethylsilylene(cyclopentadienyl)(tetramethylcyclopentadienyl)zirconium dichloride,
   (18) dimethylsilylene(cyclopentadienyl)(3,4-diethylcyclopentadienyl)zirconium dichloride,
   (19) dimethylsilylene(cyclopentadienyl)(triethylcyclopentadienyl)zirconium dichloride,
   (20) dimethylsilylene(cyclopentadienyl)(tetraethylcyclopentadienyl)zirconium dichloride,
   (21) dimethylsilylene(cyclopentadienyl)(fluorenyl)zirconium dichloride,
   (22) dimethylsilylene(cyclopentadienyl)(2,7-di-tert-butylfluorenyl)zirconium dichloride,
   (23) dimethylsilylene(cyclopentadienyl)(octahydrofluorenyl)zirconium dichloride,
   (24) dimethylsilylene(2-methylcyclopentadienyl)(fluorenyl)zirconium dichloride,
   (25) dimethylsilylene(2,5-dimethylcyclopentadienyl)(fluorenyl)zirconium dichloride,
   (26) dimethylsilylene(2-ethylcyclopentadienyl)(fluorenyl)zirconium dichloride,
   (27) dimethylsilylene(2,5-diethylcyclopentadienyl)(fluorenyl)zirconium dichloride,
   (28) dimethylsilylene(2-methylcyclopentadienyl)(2,7-di-tert-butylfluorenyl)zirconium dichloride,
   (29) dimethylsilylene(2,5-dimethylcyclopentadienyl)(2',7'-di-tert-butylfluorenyl)zirconium dichloride,
   (30) dimethylsilylene(2-ethylcyclopentadienyl)(2',7'-di-tert-butylfluorenyl)zirconium dichloride,
   (31) dimethylsilylene(diethylcyclopentadienyl)(2,7-di-tert-butylfluorenyl)zirconium dichloride,
   (32) dimethylsilylene(methylcyclopentadienyl)(octahydrofluorenyl)zirconium dichloride,
   (33) dimethylsilylene(dimethylcyclopentadienyl)(octahydrofluorenyl)zirconium dichloride,
   (34) dimethylsilylene(ethylcyclopentadienyl)(octahydrofluorenyl)zirconium dichloride,
   (35) dimethylsilylene(diethylcyclopentadienyl)(octahydrofluorenyl)zirconium dichloride, and the like.
(d) Transition metal compounds containing a five-membered ring ligand crosslinked with a hydrocarbyl group containing germanium, aluminum, boron, phosphorus or nitrogen:
   (1) dimethylgermaniumbis(indenyl)zirconium dichloride,
   (2) dimethylgermanium(cyclopentadienyl)(fluorenyl)zirconium dichloride,
   (3) methylaluminumbis(indenyl)zirconium dichloride,
   (4) phenylaluminumbis(indenyl)zirconium dichloride,
   (5) phenylphosphynobis(indenyl)zirconium dichloride,
   (6) ethylphoranobis(indenyl)zirconium dichloride,
   (7) phenylaminobis(indenyl)zirconium dichloride,
   (8) phenylamino(cyclopentadienyl)(fluorenyl)zirconium dichloride, and the like.
(e) Transition metal compounds containing a one five-membered ring ligand:
   (1) pentamethylcyclopentadienylbis(phenyl)aminozirconium dichloride,
   (2) indenylbis(phenyl)aminozirconium dichloride,
   (3) 4,5,6,7-tetrahydroindenyl-bis(trimethylsilyl)aminozirconium dichloride,
   (4) pentamethylcyclopentadienylbisphenylphosphinozirconium dichloride,
   (5) dimethylsilylene(tetramethylcyclopentadienyl)phenylaminozirconium dichloride,
   (6) dimethylsilylene(tetrahydroindenyl)decylaminozirconium dichloride,
   (7) dimethylsilylene(tetrahydroindenyl)((trimethylsilyl)amino)zirconium dichloride,
   (8) dimethylgerman(tetramethylcyclopentadienyl)-(phenyl)aminozirconium dichloride,
   (9) phenylmethylsilylene(fluorenyl)(2,6-diisopropylphenyl)aminozirconium dichloride, and the like.
(f) The aforementioned compounds (a)-(e) of which chlorine has been replaced with the other substituents such as bromine, iodine, hydride, methyl or phenyl can also be used and are other examples of Sub-component (i) in the present invention.

In the present invention, the aforementioned compounds (a)-(e) of which the central metal, zirconium, has been replaced with the other metal such as titanium, hafnium, niobium, molybdenum or wolfram can also be used and still other examples of Sub-component (i) in the present invention.

Among these compounds, the zirconium compounds, the hafnium compounds and the titanium compounds are preferred. The more preferred ones are the titanium compound, the zirconium compound and the hafnium compound crosslinked with a short chain alkylene group or a short chain silylene group.

### Sub-component (ii)

The Sub-component (ii) is a Lewis acid. In the present invention, any Lewis -acid which is recognized to produce the effects of the present invention may be used. Examples of such Lewis acids are (a) a metal halide compound such as MgCl₂, AlCl₃, AlF₃, BCl₃, BF₃ and SiCl₄; (b) a metal oxide such as alumina and silica alumina; (c) a boron compound such as trimethylboron, triethylboron, triphenylboron, tris(pentafluorophenyl)boron, triisopropylboron, tributylboron, trixylylboron, tris(difluorophenyl)boron, tris( fluorophenyl)boron, dimethylphenylboron, diphenylboron, and diphenylmethoxyboron; (d) an organoboron compound such as triphenylcarbyltetrakis(pentafluorophenyl)boron.

Among these compounds, the organoboron compound is preferred. More preferable are arylboron compounds, particularly halogen-substituted phenylboron compounds, above all, fluorophenylboron compounds, especially tris(pentafluorophenyl)boron.

### Sub-component (iii)

The Sub-component (iii) is an organoaluminum compound.

Specific examples are those defined by a formula: R⁵₃₋ₙAlXₙ or R⁶₃₋ₘAl(OR⁷)ₘ, wherein R⁵ and R⁶ may be the same or different and represent a hydrocarbyl group having 1 - about 20 carbon atoms or a hydrogen atom, R⁷ represents a hydrocarbyl group having 1 - about 20 carbon atoms, X represents a halogen atom; and n and m denote integers defined as 0 ≤ n < 3 and 0 < m < 3, or the compounds represented by the following general formula (I) or (II): 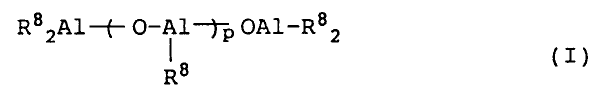 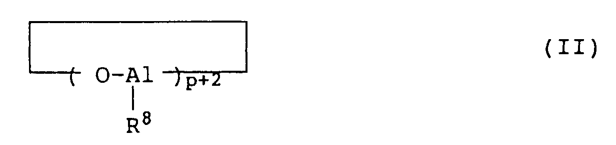 wherein p denotes a number from 0 to 40, preferably from 2 to 25, and R⁸ represents a hydrocarbyl group having preferably 1 to 10 carbon atoms, particularly 1 to 4 carbon atoms. R⁸ in plurality may or may not be the same from each other.

Specific examples are (a) a trialkylaluminum such as trimethylaluminum, triethylaluminum, triisobutylaluminum, trihexylaluminum, trioctylaluminum, and tridecylaluminum; (b) an alkylaluminum halide such as diethylaluminum monochloride, diisobutylaluminum monochloride, ethylaluminum sesquichloride, and ethylaluminum dichloride; (c) an alkylaluminum hydride such as diethylaluminum hydride, and diisobutylaluminum; (d) an aluminum alkoxide such as diethylaluminum ethoxide, and diethylaluminum phenoxide; (e) an alumoxane such as methylalumoxane, ethylalumoxane, isobutylalumoxane, and methylisobutylalumoxane. It is also possible to use these compounds in combination thereof. Among them, a trialkylaluminum and an alumoxane are preferred, a trialkylaluminum being more preferable.

### Contact condition

As for the ratio of the amounts of the Sub-components (i), (ii) and (iii) used, the molar ratio of the transition metal compound of the component (i) (based on the metal atom) to the Lewis acid of the Sub-component (ii), viz. Sub-component (i)/Sub-component (ii), is in the range of 1/10,000 to 10/1, preferably 1/100 to 2/1, more preferably 1/50 to 1/1; and the ratio of the amounts of the components (i) and (iii) (based on the aluminum atom) used viz. Sub-component (i)/Sub-component (iii), is in the range of 1/10,000 to 10/1, preferably 1/100 to 3/1, more preferably 1/50 to 1/1.

The contact temperature is in the range of -78°C to 200°C, preferably -10°C to 100°C, more preferably 0°C to 50°C.

The components can be contacted with each other in the bulk state of solids in a grinder or pulverizer or in a diluted or slurried state in an inert solvent. The inert solvent may preferably be a hydrocarbon including aromatic hydrocarbons such as benzene, toluene and xylene and aliphatic hydrocarbons such as hexane, heptane and decane, the aromatic hydrocarbon being preferable. Among these methods, the method wherein the components are in diluted in an inert solvent is preferred. The contact is carried out under the concentration of the component (i) of 1 µM/liter or more, preferably 50 µM/liter or more, more preferably 200 µM/liter or more, and up to a saturated concentration of the component (i) in the inert solvent used. While the contact is ordinarily carried out under an inert gas atmosphere, it can also be carried out in the presence of an α-olefin, wherein a small amount of a polymer of the α-olefin is produced, namely under a condition of preliminary polymerization.

### Component (B)

The component (B) is an alumoxane represented by the following formula (III) or (IV): 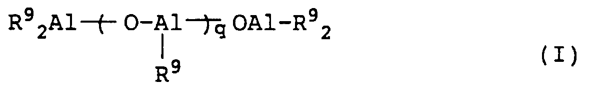 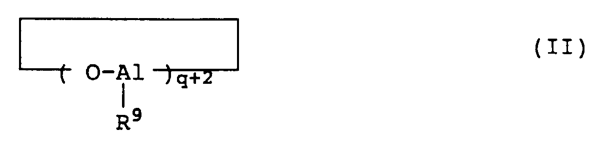 wherein q denotes a number from 0 to 40, preferably from 2 to 25, and R⁹ represents a hydrocarbyl moiety having preferably 1 to 10 carbon atoms, particularly a lower alkyl of 1 to 4 carbon atoms. R⁹ in plurality may or may not be the same to each other.

The alumoxane is a product obtained by the reaction with water of a single species of a trialkylaluminum or two or more species of a trialkylaluminum. Specifically, alumoxanes obtained from a single species of trialkylaluminum such as methylalumoxane, ethylalumoxane, butylalumoxane and isobutylalumoxane, and alumoxanes obtained from two species of a trialkylaluminum such as methylethylalumoxane, methylbutylalumoxane, and methylisobutylalumoxane are examples.

These alumoxanes may or may not be used in combination with each other. It is also possible to use crude alumoxanes containing an alkylaluminum in a small amount such as up to 30% by weight.

It is also possible to use an alumoxane previously denaturated by reacting two alumoxanes or an alumoxane and another organoaluminum compound.

Among these alumoxanes, methylalumoxane, isobutylalumoxane, methylisobutylalumoxane and a mixture thereof with a trialkylaluminum are preferably used. The particularly preferred ones are methylalumoxane and methylisobutylalumoxane.

These alumoxanes can be prepared under various wellknown conditions. Specifically, the following methods can be specified:
(i) a method where a trialkylaluminum is directly reacted with water in the presence of an appropriate organic solvent such as toluene, benzene or ether;
(ii) a method where a trialkylaluminum is reacted with a salt hydrate having water of crystallization such as a hydrate of copper sulfate or aluminum sulfate;
(iii) a method where a trialkylaluminum is reacted with water impregnated into silica gel;
(iv) a method where trimethylaluminum and triisobutylaluminum are admixed and the admixture is directly reacted with water in the presence of an appropriate organic solvent such as toluene, benzene or ether;
(v) a method where trimethylaluminum and triisobutylaluminum are admixed and the admixture is reacted under heating with a salt hydrate having water of crystallization such as a hydrate of copper sulfate or aluminum sulfate;
(vi) a method where silica gel impregnated with water is treated with triisobutylaluminum followed by additionally treatment with trimethylaluminum, and
(vii) a method where methylalumoxane and isobutylalumoxane are synthesized by a known method, the predetermined amounts of these two components are admixed and reacted under heating.

### Production of α-olefin polymers

The process for producing α-olefin polymers according to the present invention is conducted by contacting in a polymerization vessel a polymerization catalyst comprising the above-described components (A) and (B) with an α-olefin to be polymerized.

While any amounts of the components (A) and (B) can be used in the present invention, the atomic ratio of the aluminum atom of the alumoxane of the component (B) to the metal atom of the transition metal compound of the component (A), Al/Me, is in the range of 0.01 to 10,000, preferably 0.1 to 3,000, more preferably 1 to 2,000, particularly 20 to 1,000 in order to enjoy the advantages inherent in the present invention to the maximum possible.

As described above, the catalyst according to the present invention may, upon necessity, contain, in addition to the components (A) and (B), optional component or components. As the optional component, use can be made of (i) an active hydrogen-containing compound such as water, or an alkanol or phenol, preferably a lower alkanol such as methanol, ethanol, or butanol; (ii) an electron donor compound such as an ether, an ester, or an amine; and (iii) a B-, P- or Si-containing compound such as phenyl borate, phenyl phosphite, tetraethoxysilane or diphenyldimethoxysilane.

The catalyst for the polymerization of an olefin according to the present invention, which is applied to an ordinary slurry polymerization, is applied also to solventless polymerization in which substantially no solvent is used, solution polymerization or vapor phase polymerization. It is also applied to the polymerization fashions such as continuous polymerization, batch-wise polymerization or polymerization where preliminary polymerization is conducted. Thus, the process for producing an α-olefin polymer according to the present invention include the aforementioned polymerization methods or polymerization fashions.

As a solvent for polymerization in the case of slurry polymerization, saturated aliphatic or aromatic hydrocarbons such as hexane, heptane, pentane, cyclohexane, benzene, and toluene are used alone or as a mixture thereof. The polymerization temperature is in the range of -78°C to about 200°C, preferably 0°C to 150°C, and hydrogen gas can be used optionally as a molecular weight regulator. In the case of slurry polymerization, the amount of the component (A) used is preferably in the range of 0.0001 to 1.0 g of the component (A)/liter of the solvent.

The α-olefins polymerized in the presence of the catalyst system according to the present invention, that is, the α-olefins contacted with the catalyst to polymerize according to the present invention are represented by the general formula R-CH=CH₂, wherein R represents a hydrogen atom or a linear or branched hydrocarbyl group having 1-20 carbon atoms. Specific examples of the α-olefins include ethylene, propylene, butene-1, pentene-1, hexene-1, 4-methylpentene-1, decene-1, and hexadecene-1. Preferred are ethylene and propylene. In the case of polymerization of ethylene, the aforementioned olefin other than ethylene can be copolymerized in a proportion of up to 50% by weight, preferably up to 20% by weight of ethylene; and in the case of polymerization of propylene, the aforementioned olefin other than propylene, particularly ethylene, butene-1, hexene-1, decene-1, hexadecene-1 or the like can be copolymerized in a proportion of up to 30% by weight of propylene. The aforementioned α-olefin can also be copolymerized with the other copolymerizable monomer such as vinyl acetate or diolefins.

### EXAMPLES

### Example 1

### Preparation of Component (A)

Ethylenebis(4,5,6,7-tetrahydroindenyl)zirconium dichloride was synthesized in accordance with the method described in J. Orgmet. Chem., 288, 63-67, 1985. Next, to a 300 ml flask which had been thoroughly purged with nitrogen were introduced 100 ml of dehydrated and deoxygenated diethyl ether and 1.28 g (3 mM) of ethylenebis(4,5,6,7-tetrahydroindenyl)zirconium dichloride synthesized by the above-described method. Methyllithium (a solution in diethyl ether in 1.6 M/lit. concentration) in an amount of 3.8 ml (6 mM) was then added dropwise at a temperature of no higher than -50°C, the refrigerant used being a mixture of dry ice and methanol, over a period of 10 minutes. The mixture was maintained at a temperature of no higher than -50°C for 1 hour and then warmed to room temperature over a period of 2 hours. After the temperature was raised, the mixture was reacted at room temperature for 6 hours. After the reaction was completed, the solvent was removed under reduced pressure. After 50 ml of toluene was added to the residue and insolubles were removed by filtration, the filtrate was concentrated to a volume of 20 ml and left standing overnight. Resulting crystals were collected by filtration and dried to give ethylenebis(4,5,6,7-tetrahydroindenyl)zirconium dimethyl, Sub-component (i), was obtained in the yield of 0.95 g.

In a 300 ml flask which had been thoroughly purged with nitrogen were mixed 100 ml of dehydrated and deaerated toluene, 43 mg (0.1 mM) of ethylenebis(4,5,6,7-tetrahydroindenyl)zirconium dimethyl as Sub-component (i), and 110 mg (0.20 mM) of tris(pentafluorophenyl)boron as Sub-component (ii), and 36 mg (0.5 mM) of trimethylaluminum as Sub-component (iii) was added. The mixture was stirred at room temperature for 30 minutes to give a dilute solution of Component (A).

### Polymerization of propylene

Into a stainless autoclave which had an internal volume of 1.0 liter and was equipped with a stirring and a temperature control devices were introduced 400 ml of thoroughly dehydrated and deoxygenated toluene, 0.06 g (1 mM, based on an aluminum atom) of methylalumoxane, manufactured by SCHERING, as Component (B), and 2 ml (2 µM, based on Sub-component (i) of Component (A) obtained above, and polymerization was conducted at a propylene pressure of 7 Kg/cm²·G and a polymerization temperature of 40°C for 2 hours. After the polymerization was completed, the polymerization reaction product was taken out and added to 1 liter of ethanol. The filtration and drying of the precipitated polymerization product gave 77 g of a polymer. Polymerization activity was thus 89,500 g-polymer/g-Sub-component (i).

As a result of gel permeation chromatography, the polymer had a number average molecular weight (Mn) of 22.6 × 10³ and a molecular weight distribution expressed as a ratio of weight average molecular weight (Mw) number average molecular weight (Mn) of 2.03. As the result of ¹³C-NMR with a spectrometer JEOL. FX-200, the [mm] fraction of the triad was 0.926.

### Example 2

### Polymerization of propylene

Operations for polymerization were conducted under the conditions in Example 1 except that 0.036 g (0.6 mM) of methylalumoxane (manufactured by SCHERING) was used as Component (B). The results obtained are shown in Table 1.

### Comparative Examples 1 and 2

### Preparation of Component (A)

Operations for preparation of Component (A) were conducted under the same condition as in Example 1 except that tris(pentafluorophenyl)boron as Sub-component (ii) or trimethylaluminum as Sub-component (iii) was not used in the preparation of the component (A) in Example 1.

### Polymerization of propylene

Operations for polymerization were conducted as in Example 1 except that Component (A) prepared in the above was used. The results obtained are shown in Table 1.

### Comparative Example 3

### Polymerization of propylene

Operations for polymerization were conducted as in Example 1 in the device used in Example 1 except that in place of Component (A) used therein 0.86 mg (2 µM) of ethylenebis(4,5,6,7-tetrahydroindenyl)zirconium dimethyl as Sub-component (i), 2.20 mg of (4 µM) of tris(pentafluorophenyl)boron as Sub-component (ii), and 0.72 mg of trimethylaluminum as Sub-component (iii) were introduced in succession without undergoing preliminary contact and 0.06 g of methylalumoxane, manufactured by Schering, as Component (B), was then introduced.

### Comparative Example 4

### Polymerization of propylene

Operations for polymerization was conducted as in Example 1 except that 0.86 mg of ethylenebis(4,5,6,7-tetrahydroindenyl)zirconium dimethyl as Sub-component (i) and 0.06 g of methylalumoxane (manufactured by Schering) as Component (B) were introduced into the device. The results are shown in Table 1.

### Examples 3 - 9

### Preparation of Component (A)

The component (A) was prepared as in Example 1 except that the amounts of the components used and the types of Sub-components (ii) and (iii) were changed to those shown in Table 2.

### Polymerization of propylene

Polymerization operation was conducted as in Example 1 except that Component (A) prepared above was used. The results are shown in Table 2.

### Example 10

### Preparation of Sub-component (i)

Dimethylsilylenebis(tetrahydroindenyl)zirconium dichloride was synthesized in accordance with the methods described in J. Orgmet. Chem., 342, 21-29 (1988) and ibid., 369, 359-370 (1989).

Specifically, in a 300 ml flask which had been purged with nitrogen, 5.4 g of bis(indenyl)dimethylsilane was diluted with 150 ml of tetrahydrofuran and cooled to a temperature of -50°C, and 23.6 ml of n-butyllithium (1.6 M/lit.) was then added dropwise over a period of 30 minutes. After the addition was completed, the mixture was heated to room temperature over a period of 1 hour and reacted at room temperature for four hours to give the reaction liquid A.

In a 500 ml flask which had been purged with nitrogen, 200 ml of tetrahydrofuran was introduced and cooled at a temperature of -50°C, and 4.38 g of zirconium tetrachloride was slowly introduced. Next, the total amount of the reaction liquid A was introduced and warmed slowly to room temperature over a period of three hours. After reaction at room temperature for two hours, the mixture was further heated to 60°C and reacted at the temperature for two hours. After the reaction was completed and the solvent was removed under reduced pressure, the residue was dissolved in 100 ml of toluene and the solvent was removed again under reduced pressure to give 3.86 g of crude crystals of dimethylsilylenebis(indenyl)zirconium dichloride.

Next, the crude crystals were dissolved in 150 ml of dichloromethane and introduced into a 500 ml autoclave. 5 g of a platinum-carbon (on which 0.5% by weight of platinum was carried) catalyst was introduced, the mixture was subjected to hydrogenation at H₂ = 50 Kg/cm²·G and 50°C for 5 hours. After the reaction was completed, the catalyst was removed by filtration, the solvent was removed under reduced pressure. The residue was subjected to extraction with toluene and the extract was subjected to recrystallization to give desired dimethylsilylenebis(tetrahydroindenyl)zirconium dichloride in a yield of 1.26 g.

### Preparation of Component (A)

Component (A) was prepared as in Example 1 except that Sub-component (i) synthesized in the above was used.

### Polymerization of propylene

Polymerization operation was conducted as in Example 1 except that Component (A) prepared above was used. The results are shown in Table 3.

### Comparative Example 5

Polymerization operation was conducted as in Comparative Example 4 except that Sub-component (i) prepared in Example 10 was used. The result is shown in Table 3.

### Example 11

### Preparation of the component (i)

### Preparation of isopropylidene(cyclopentadienyl)-(fluorenyl)zirconium dichloride

Into a 500 ml flask which had been thoroughly purged with nitrogen, 200 ml of THF and 16.5 g of fluorene were introduced and cooled to no higher than -50°C followed by addition of 67 ml of a solution of methyllithium in diethyl ether (1.4 M) dropwise over a period of 30 minutes. The mixture was then warmed slowly to room temperature and reacted for 3 hours. The reaction mixture was again cooled to no higher than -50°C, and 10 g of 6,6-dimethylfulvene was added dropwise over a period of 30 minutes. After the addition was completed, the mixture was warmed slowly to room temperature to react for 2 days. When the reaction was completed, 60 ml of H₂O of water was added to stop the reaction, and the etherial layer was separated and dried over anhydrous MgSO₄. The ether solvent was evaporated to give crude crystals of 2-cyclopentadienyl-2-fluorenylpropane in a yield of 17.6 g.

Next, 10 g of the crude crystals were dissolved in 100 ml of THF and cooled to -50°C, and 46.0 ml of n-butyllithium (0.0736 mole) was added to the solution over a period of 10 minutes. The temperature of the mixture was raised to room temperature over a period of 1 hour, and the mixture was reacted at room temperature for 2 hours. After the solvent was evaporated to dryness in a nitrogen stream, 100 ml of dichloromethane was added, and the solution was cooled to no higher than -50°C. Next, 8.16 g of zirconium tetrachloride dissolved in 50 ml of dichloromethane under a low temperature was added in one portion. After the mixture was formed, the temperature was slowly raised over a period of 3 hours, and the mixture was reacted at room temperature for 1 day. After the reaction was completed, the solid content was removed by filtration, and the filtrate obtained was concentrated and recrystallized to give 4.68 g of isopropylidene(cyclopentadienyl)-(fluorenyl)zirconium dichloride as a red product.

### Preparation of the Component (A)

The Component (A) was prepared as in Example 1 except that Sub-component (i) prepared above was used.

### Polymerization of propylene

Polymerization operations were conducted as in Example 1 except that Component (A) prepared above was used. The results are shown in Table 3.

### Comparative Example 6

Polymerization operations were conducted as in Comparative Example 4 except that Sub-component (i) prepared in Example 11 was used. The results are shown in Table 3.

### Example 12

### Preparation of Sub-component (i)

Dimethylsilylene(tetramethylpentadienyl)-tert-butylaminotitanium dichloride was synthesized in accordance with the method described in Example 2 of Japanese Patent Laid-Open Publication No. 163088/1991.

### Preparation of Component (A)

Component (A) was prepared as in Example 1 except that Sub-component (i) prepared above was used.

### Polymerization of propylene

Polymerization operations were conducted as in Example 1 except that Component (A) prepared above was used. The results are shown in Table 3.

### Comparative Example 7

Polymerization operations were conducted as in Comparative Example 4 except that Sub-component (i) prepared in Example 12 was used. The results are shown in Table 3.

### Example 13

### Polymerization of ethylene

Into a stainless steel autoclave equipped with a stirrer and a temperature control devices and having an internal volume of 1.0 liter were introduced 400 ml of thoroughly dehydrated and deoxygenated toluene, 0.06 g (1 mM) of methylalumoxane (manufactured by Schering) as Component (B) and 2 ml (2 µM, based on Sub-component (i)) of Component (A) prepared in Example 1, followed by 50 ml of hydrogen, and the polymerization operations were conducted at an ethylene pressure of 5 Kg/cm²·G and a polymerization temperature of 70°C for 1 hour. After the polymerization was completed, the polymerization reaction product was placed in 1 liter of ethanol, and the polymer was filtered and dried to give 45 g of the polymer. The polymerization activity per Sub-component (i) was 52,000 (g of polyethylene/g of Sub-component (i)), and that per methylalumoxane (MAO) was 750 (g of polyethylene/g of MAO). The polymer had an MI (load: 2.16 Kg) of 1.5 at 190°C.

### Comparative Example 8

Polymerization was conducted as in Example 13 except that 0.86 mg (2 µM) of ethylenebis(4,5,6,7-tetrahydroindenyl)zirconium dimethyl was used in place of Component (A) in Example 1. As a result, a polymer was recovered in a yield of 21 g. The activity was 24,400 (g of polyethylene/g of Sub-component (i)), and that per methylalumoxane was 350 (g of polyethylene/g of MAO). The polymer had an MI of 1.4.

### Example 14

### Co-polymerization of propylene/hexene

Into a stainless steel autoclave equipped with a stirrer and a temperature control devices and having an internal volume of 1.0 liter were introduced 400 ml of thoroughly dehydrated and deoxygenated toluene, 10 ml of 1-hexene, 2 ml (2 µM) of Component (A) prepared in Example 1 and 0.06 g (1 µM) of methylalumoxane, manufactured by Schering, and, upon introduction of propylene, the polymerization operations were conducted at a polymerization pressure of 5 Kg/cm²·G and a polymerization temperature of 40°C for 2 hours. After the polymerization was completed, the polymerization solution was placed in 3 liters of ethanol, and the polymer was filtered and dried to give 52.3 g of the polymer. As a result of analysis by gel permeation chromatography, the polymer had a number average molecular weight (Mn) of 2.45 × 10³, a molecular weight distribution as the ratio of weight average molecular weight/number average molecular weight of 1.91, a triad [mm] fraction of 0.918 and an 1-hexene content of 3.8% by mole.

### Comparative Example 9

Polymerization operations were conducted as in Example 14 except that in place of Component (A) used therein 0.86 ml (2 µM) of ethylenebis(4,5,6,7-tetrahydroindenyl)zirconium dimethyl was used. As a result, a polymer was recovered in a yield of 17.8 g. The polymer had a number average molecular weight (Mn) of 2.33 × 10³, a molecular weight distribution Mw/Mn of 1.93, a triad [mm] fraction of 0.920 and a hexene content of 3.9% by mole.

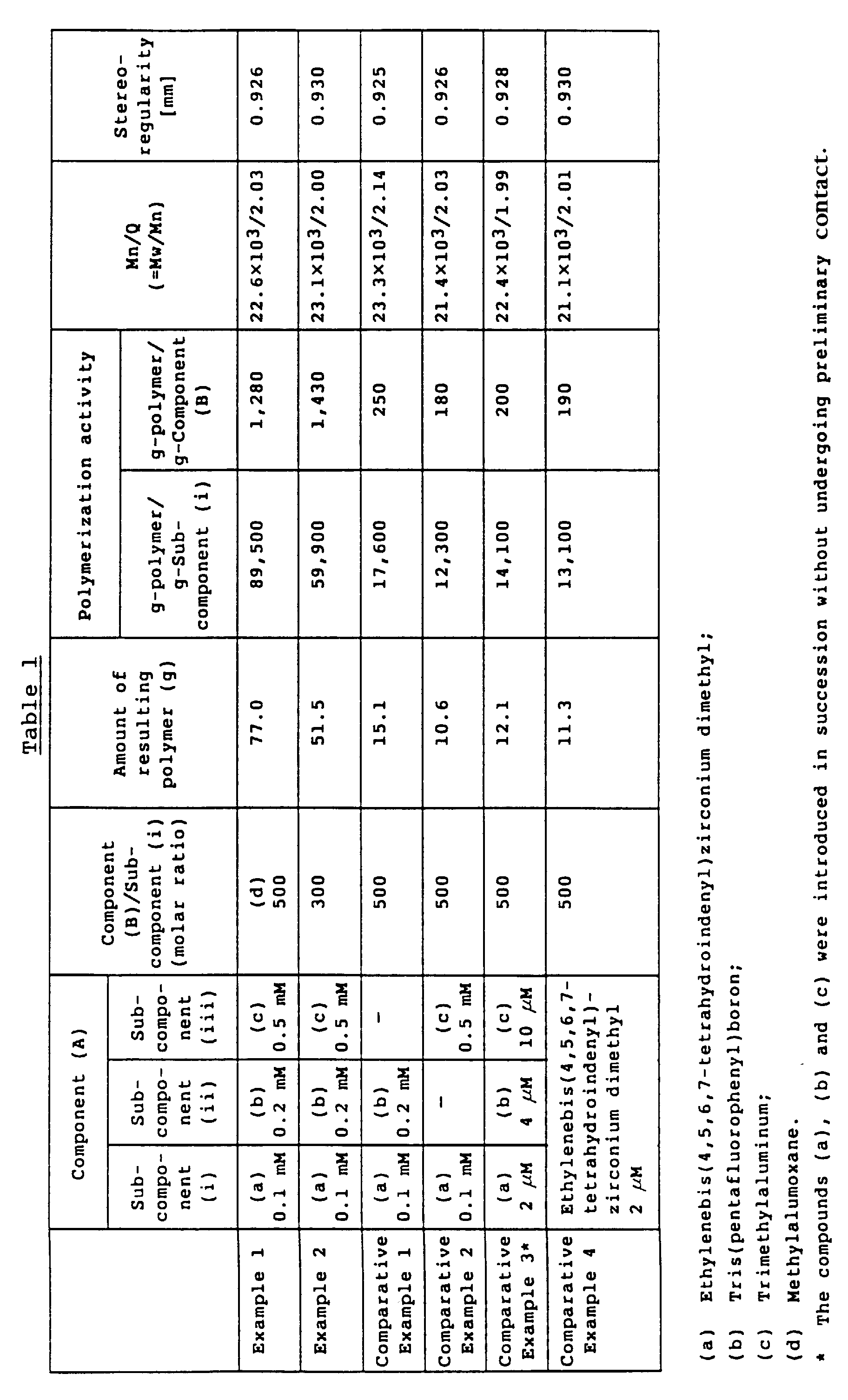

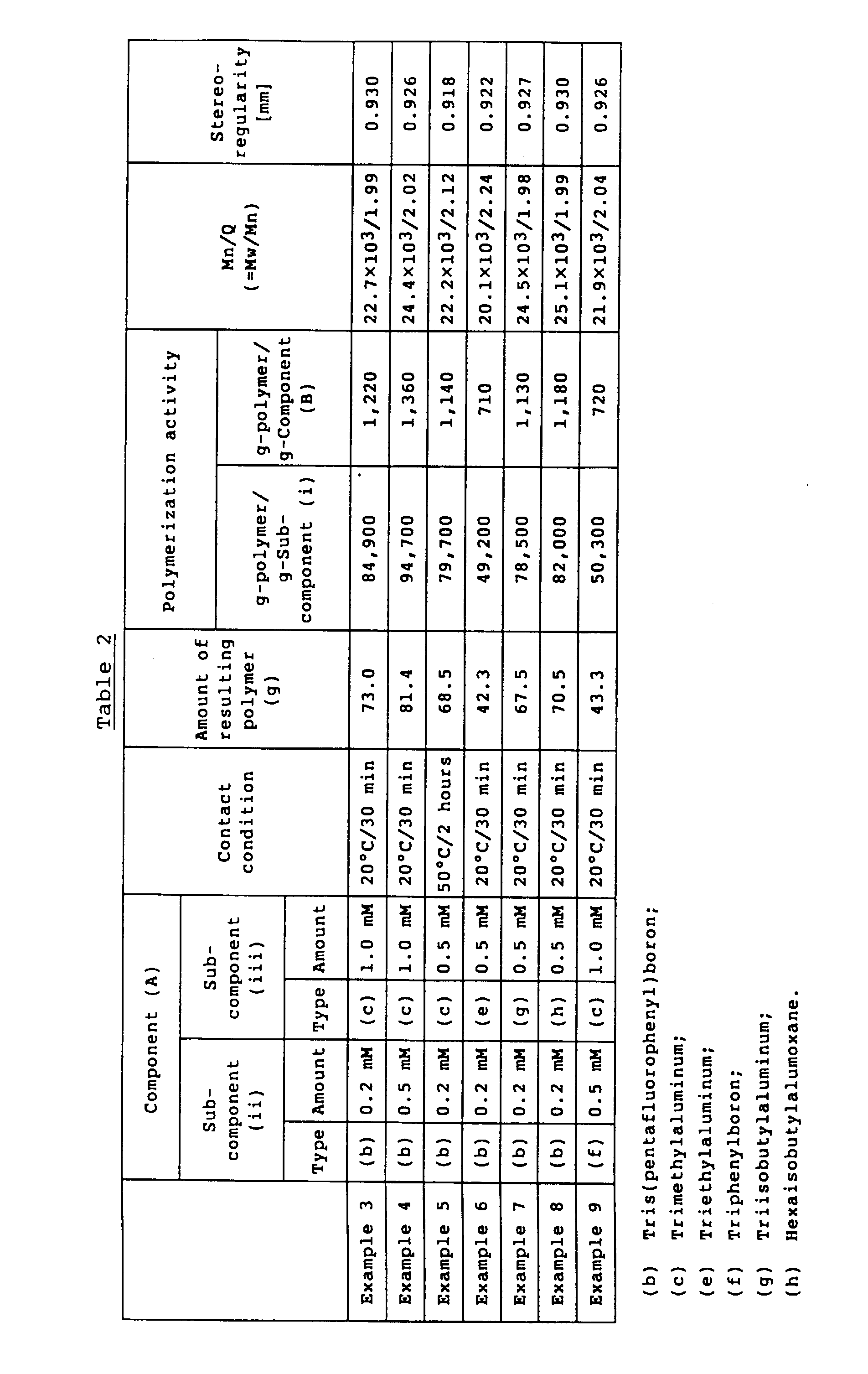

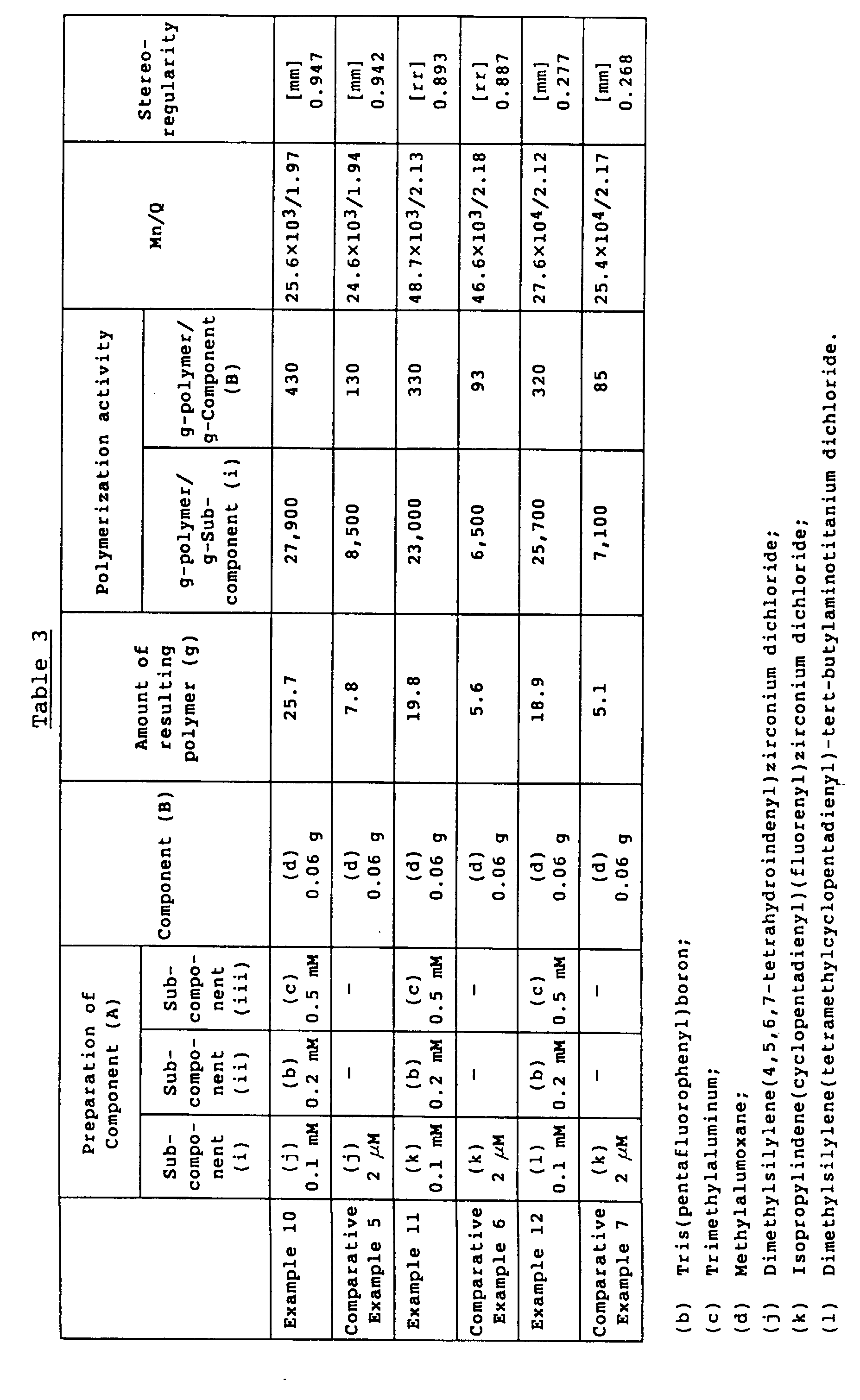

## Claims

1. A process for producing an α-olefin polymer comprising subjecting an α-olefin to contact, in a polymerization vessel, with a catalyst which comprises the following components (A) and (B) thereby polymerizing same:
Component (A) which is a contact product of the following Sub-components (i), (ii), and (iii) contacted with each other in an inert solvent, the concentration of Sub-component (i) being no lower than 50µM/liter:
Sub-component (i) which is a transition metal compound represented by the general formula:
Qₐ(C₅H_{5-a-b}R¹ _{b})(C₅H_{5-a-c}R² _{c})MeXY
or
A_{d}(C₅H_{5-d-e}R³ ₑ)(R⁴ _{2-d}J)MeXY,
wherein: each of (C₅H_{5-a-b}R¹_{b}), (C₅H_{5-a-c}R²_{c}) and (C₅H_{5-d-e}R³ₑ), represents a conjugated five-membered ring ligand which coordinates with a metal Me, in which R¹, R² and R³ represent, respectively, a monovalent group selected from the group consisting of a hydrocarbyl group having 1-20 carbon atoms, an alkoxy group having 1-12 carbon atoms, a silicon-containing hydrocarbyl group having 1-24 carbon atoms, a phophorus-containing hydrocarbyl group having 1-18 carbon atoms, a nitrogen-containing hydrocarbyl group having 1-18 carbon atoms and a boron-containing hydrocarbyl group having 1-18 carbon atoms, R⁴ represents a monovalent group consisting of a hydrocarbyl group having 1-20 carbon atoms, a silicon-containing hydrocarbyl group having 1-24 carbon atoms and an oxygen-containing hydrocarbyl group having 1-20 carbon atoms, wherein R¹ and R² may be the same or different, or Is, if present in plurality, may be the same or different or may or may not be bonded at their free terminus, and R² (or R³), if present in plurality, may be the same or different or may or may not be bonded together at their free terminus; Q represents a divalent bridge group which crosslinks the two conjugated five-membered ring ligands indicated; A represents a divalent bridge group which crosslinks the groups indicated, namely (C₅H_{5-d-e}R³ₑ) and (R⁴_{2-d}J), in which J represents a nitrogen or phosphorus atom which bonds to Me; Me represents a transition metal of the IVB-VIB group in the Periodic Table; each of X and Y, which may be the same or different, represents a monovalent group consisting of a hydrogen atom, a halogen atom, a hydrocarbyl group having 1-20 atoms, an alkoxy group having 1-20 carbon atoms, an amino group which may or may not be substituted with up to two hydrocarbyl groups having 1-20 carbon atoms, a phosphorus-containing hydrocarbyl group having 1-20 carbon atoms and a silicon-containing hydrocarbyl group having 1-20 carbon atoms; a and d denote 0 or 1; b and c denote integers defined as 0 ≤ b ≤ 5 and 0 ≤ c ≤ 5, respectively, when a denotes 0, and b and c denote integers defined as 0 ≤ b ≤ 4 and 0 ≤ c ≤ 4, respectively, when a denotes 1; e denotes an integer defined as 0 ≤ e ≤ 5 when d denotes 0 and an integer defined as 0 ≤ e ≤ 4 when d denotes 1;
Sub-component (ii) which is a Lewis acid; and
Sub-component (iii) which is an organoaluminum compound; and
Component (B) which is an alumoxane, the contact of Sub-components (i), (ii) and (iii) being conducted in a vessel other than the polymerization vessel to form Component (A), which is then fed to the polymerization vessel where it is contacted with Component (B) to form the catalyst.

2. The process as claimed in claim 1, wherein Sub-component (i) is a compound of the formula:
Qₐ(C₅H_{5-a-b}R¹ _{b})(C₅H_{5-a-c}R² _{c})MeXY
where a is 1, Q is a bridge selected from the group consisting of an alkylene group having up to 3 carbon atoms in its shortest chain and a silylene group having up to 3 silicon atom in its shortest chain, Me is selected from the group consisting of Ti, Zr and Hf, (C₆H_{5-a-b}R¹_{b}) and (C₅H_{5-a-c}R²_{c}) are selected from the group consisting of a cyclopentadienyl group, an indenyl group, a tetrahydroindenyl group, a fluorenyl group and those groups substituted with at least one lower alkyl group, and each of X and Y is selected from the group consisting of a halogen atom and a hydrocarbyl group of 1 to 4 carbon atoms.

3. The process as claimed in claim 1, wherein Sub-component (i) is a compound of the formula:
Qₐ(C₅H_{5-a-b}R¹ _{b})(C₅H_{5-a-c}R² _{c})MeXY
where a is 0, Me is selected from the group consisting of Ti, Zr and Hf, (C₆H_{5-a-b}R¹_{b}) and (C₅H_{5-a-c}R²_{c}) are selected from the group consisting of a cyclopentadienyl group, an indenyl group, a tetrahydroindenyl group, a fluorenyl group and those groups substituted with at least one lower alkyl group, and each of X and Y is selected from the group consisting of a halogen atom and a hydrocarbyl group of 1 to 4 carbon atoms.

4. The process as claimed in claim 1, wherein the Sub-component (i) is a compound of the formula:
A_{d}(C₅H_{5-d-e}R³ ₑ)(R⁴ _{2-d}J)MeXY
where d is 1, R⁴ is a monovalent hydrocarbyl group having 1 to 12 carbon atoms; J is a nitrogen or a phosphorus atom; Me is selected from the group consisting of Ti, Zr and Hf; (C₅H_{5-d-e}R³ₑ) is selected from the group consisting of a cyclopentadienyl group, an indenyl group, a tetrahydroindenyl group, a fluorenyl group and those groups substituted with at least one lower alkyl group; A is a bridge selected from the group consisting of an alkylene group having up to 3 carbon atoms in its shortest chain and a silylene group having up to 3 silicon atom in its shortest chain; and each of X and Y is selected from the group consisting of a halogen atom and a hydrocarbyl group of 1 to 4 carbon atoms.

5. The process as claimed in claim 1, wherein Sub-component (ii) is an arylboron compound.

6. The process as claimed in claim 5, wherein the arylboron compound is a fluorophenylboron compound.

7. The process as claimed in claim 5, the arylboron compound is tris(pentafluorophenyl)boron.

8. The process as claimed in claim 1, wherein Sub-component (iii) is selected from trialkylaluminums and alumoxanes, and Sub-component (ii) is an arylboron compound.

9. The process as claimed in claim 8, wherein Subcomponent (iii) is a trialkylaluminum.

10. The process as claimed in claim 1, wherein Component (A) and Component (B) used are in an atomic ratio of the aluminum atom of the alumoxane of Component (B) to the metal atom of the transition metal compound of Component (A), Al/Me, in the range of 0.1 to 3,000.

11. The process as claimed in claim 2, wherein the α-olefin polymer is selected from the group consisting of homopolymers of propylene and copolymers of propylene with an olefin other than propylene in a proportion up to 30% by weight of the propylene.

12. The process as claimed in claim 1, wherein Sub-component (iii) is selected from the group consisting of trialkylaluminums and alumoxanes, Sub-component (ii) is an arylboron compound, and Component (A) and Component (B) used are in an atomic ratio of the aluminum atom of the alumoxane of Component (B) to the metal atom of the transistion metal compound of component (A), Aℓ/Me, in the range of 0.1 to 3,000.

## Patentansprüche

1. Verfahren zur Herstellung eines α-Olefinpolymeren, umfassend die Kontaktbehandlung eines α-Olefins in einem Polymerisationsgefäß zur Durchführung einer Polymerisation mit einem Katalysator, der die folgenden Komponente (A) und (B) umfaßt:
Komponente (A) als Einwirkungsprodukt der folgenden Unterkomponenten (i), (ii) und (iii), die mit einander in einem inerten Lösungsmittel umgesetzt werden, wobei die Konzentration der Unterkomponente (i) nicht kleiner als 50 µM/l ist:
Subkomponente (i) als Übergangsmetallverbindung der allgemeinen Formel:
Qₐ(C₅H_{5-a-b}R¹ _{b})(C₅H_{5-a-c}R² _{c}) MeXY
oder
A_{d}(C₅H_{5-d-e}R³ ₑ)(R⁴ _{2-d}J)MeXY,
mit (C₅H_{5-a-b}R¹_{b}), (C₅H_{5-a-c}R²_{c}) und (C₅H_{5-d-e}R³ₑ) jeweils ein konjugierter fünfgliedriger Ringligand, der mit einem Metall Me koordiniert ist, R¹, R², R³ jeweils ein einwertiger Rest, ausgewählt aus der Gruppe umfassend einen C₁- bis C₂₀-Kohlenwasserstoffrest, einen C₁- bis C₁₂-Alkoxyrest, einen siliciumhaltigen C₁- bis C₂₄-Kohlenwasserstoffrest, einen phosphorhaltigen C₁- bis C₁₈-Kohlenwasserstoffrest, einen stickstoffhaltigen C₁- bis C₁₈-Kohlenwasserstoffrest und einen borhaltigen C₁- bis C₁₈-Kohlenwasserstoffrest, R⁴ ein einwertiger Rest umfassend einen C₁- bis C₂₀-Kohlenwasserstoffrest, einen siliciumhaltigen C₁- bis C₂₄-Kohlenwasserstoffrest und einen sauerstoffhaltigen C₁- bis C₂₀-Kohlenwasserstoffrest, wobei R¹ und R² gleich oder verschieden sind, oder die Reste R¹, wenn sie mehrfach vorhanden sind, gleich oder verschieden sind oder an ihren freien Enden gebunden oder ungebunden sind, und R² (oder R³), wenn sie mehrfach vorhanden sind, gleich oder verschieden sind, oder an ihren freien Enden miteinander gebunden oder ungebunden sind; Q ein zweiwertiger Brückenrest, der zwei konjugierte fünfgliedrige Ringliganden überbrückt; A ein zweiwertiger Brückenrest, der die angegebenen Reste, nämlich (C₅H_{5-d-e}R³ₑ) und (R⁴_{2-d}J) überbrückt; J ein Stickstoff - oder Phosphoratom, das an Me gebunden ist; Me ein Übergangsmetall der IVB- bis VIB-Gruppe des Periodensystems. X und Y, die gleich oder verschieden sein können, jeweils ein einwertiger Rest, umfassend ein Wasserstoffatom, ein Halogenatom, einen C₁-bis C₂₀-Kohlenwasserstoffrest, einen C₁- bis C₂₀-Alkoxyrest, einen Aminorest, der mit bis zu zwei C₁- bis C₂₀-Kohlenwasserstoffresten substituiert sein kann, einen phosphorhaltigen C₁- bis C₂₀-Kohlenwasserstoffrest und einen siliciumhaltigen C₁- bis C₂₀-Kohlenwasserstoffrest; a und d haben die Werte 0 oder 1; b und c sind ganzzahlig mit der Nebenbedingung 0 ≤ b ≤ 5 und 0 ≤ c ≤ 5, wenn a den Wert 0 hat; b und c sind ganzzahlig mit der Nebenbedingung 0 ≤ b ≤ 4 und 0 ≤ c ≤ 4, wenn a den Wert 1 hat; e ist ganzzahlig mit der Nebenbedingung 0 ≤ e ≤ 5, wenn d den Wert 0 hat, und ganzzahlig mit der Nebenbedingung 0 ≤ e ≤ 4, wenn d den Wert 1 hat;
Subkomponente (ii) als Lewis-Säure und
Subkomponente (iii) als aluminiumorganische Verbindung und
Komponente (B) als ein Alumoxan;
wobei die Einwirkung der Unterkomponenten (i), (ii) und (iii) in einem von dem Polymerisationsgefäß verschiedenen Reaktionsgefäß zur Bildung der Komponente (A) durchgeführt wird, welche Komponente (A) dann in das Polymerisationsgefäß eingeleitet wird, worin eine Einwirkung mit der Komponente (B) zur Ausbildung des Katalysators erfolgt.

2. Verfahren nach Anspruch 1, mit der Unterkomponente (i) als Verbindung der Formel
Qa(C₅H_{5-a-b}R¹ _{b}) (C₅H_{5-a-c}R² _{c}) MeXY
mit a = 1, Q als Brückenrest, ausgewählt aus der Gruppe umfassend einen Alkylenrest mit bis zu 3 Kohlenstoffatomen in der kürzesten Kette und einen Silandiylrest mit bis zu 3 Siliciumatomen in der kürzesten Kette; Me ausgewählt aus der Gruppe umfassend Ti, Zr und Hf, (C₆H_{5-a-c}R¹ _{b}) und (C₅H_{5-a-c}R² _{c}) ausgewählt aus der Gruppe umfassend einen Cyclopentadienylrest, einen Indenylrest, einen Tetrahydroindenylrest, einen Fluorenylrest und diese Reste substituiert mit mindestens einem Niederalkylrest; und X und Y jeweils ausgewählt aus der Gruppe umfassend ein Halogenatom und einen C₁- bis C₄-Kohlenwasser-stoffrest.

3. Verfahren nach Anspruch 1, mit der Unterkomponente (i) als Verbindung der Formel
Qₐ(C₅H_{5-a-b}R¹ _{b}) (C₅H_{5-a-c}R² _{c}) MeXY
mit a = 0, Me ausgewählt aus der Gruppe umfassend Ti, Zr und Hf, (C₆H_{5-a-c}R¹ _{b}) und (C₅H_{5-a-c}R² _{c}) ausgewählt aus der Gruppe umfassend einen Cyclopentadienylrest, einen Indenylrest. einen Tetrahydroindenylrest, einen Fluorenylrest und diese Reste substituiert mit mindestens einem Niederalkylrest; und X und Y jeweils ausgewählt aus der Gruppe umfassend ein Halogenatom und einen C₁- bis C₄-Kohlenwasser-stoffrest.

4. Verfahren nach Anspruch 1, mit der Unterkomponente (i) als Verbindung der Formel
A_{d}(C₅H_{5-d-e}R³ ₑ)(R⁴ _{2-d}J)MeXY
mit d = 1, R⁴ als einwertiger C₁- bis C₁₂-Kohlenwasserstoffrest; J als Stickstoff- oder Phosphoratom; Me ausgewählt aus der Gruppe bestehend aus Ti, Zr und Hf, (C₅H_{5-d-c}R³ₑ) ausgewählt aus der Gruppe bestehend aus einem Cyclopentadienylrest, einen Indenylrest, einen Tetrahydroindenylrest, einen Fluorenylrest und diesen Resten substituiert mit mindestens einem Niederalkylrest: A als Überbrückungsrest ausgewählt aus der Gruppe bestehend aus einem Alkylenrest mit bis zu 3 Kohlestoffatomen in der kürzesten Kette und einem Silandiylrest mit bis zu 3 Siliciumatomen in der kürzesten Kette: und X und Y jeweils ausgewählt aus der Gruppe umfassend ein Halogenatom und einen C₁- bis C₄-Kohlenwasserstoffrest.

5. Verfahren nach Anspruch 1. mit der Unterkomponente (ii) als einer Borarylverbindung.

6. Verfahren nach Anspruch 5, mit der Borarylverbindung als Borfluorphenylverbindung.

7. Verfahren nach Anspruch 5, mit der Borarylverbindung als tris(Pentafluorphenyl)bor.

8. Verfahren nach Anspruch 1, mit der Unterkomponente (iii) ausgewählt aus Trialkylaluminiumverbindungen und Alumoxanen und der Unterkomponente (ii) als Borarylverbindung.

9. Verfahren nach Anspruch 8, mit der Unterkomponente (iii) als ein Trialkylaluminium.

10. Verfahren nach Anspruch 1, wobei die Komponenten (A) und (B) im Atomverhältnis der Aluminiumatome des Alumoxans der Komponente (B) zu den Metallatomen der Übergangsmetallverbindung der Komponete (A), Al/Me im Bereich 0,1 bis 3000 eingesetzt werden.

11. Verfahren nach Anspruch 2, wobei das α-Olefinpolymere aus der Gruppe ausgewählt ist, bestehend aus Propylenhomopolymeren und Propylencopolymeren mit einem von Propylen verschiedenen Olefin in einem Verhältnis bis zu 30 Gewichtsprozent des Propylen.

12. Verfahren nach Anspruch 1, wobei die Unterkomponente (iii) aus der Gruppe ausgewählt ist. bestehend aus Trialkylaluminiumverbindungen und Alumoxanen, die Unterkomponente (ii) eine Borarylverbindung ist und die Komponente (A) und die Komponente (B) im Atomverhältnis der Aluminiumatome des Alumoxans der Komponente (B) zu dem Metallatomen der Übergangsmetallverbindung der Komponente (A), Al/Me im Bereich von 0,1 bis 3000 eingesetzt werden.

## Revendications

1. Procédé pour produire un polymère α-oléfinique, qui comprend la soumission d'une α-oléfine à un contact, dans un réacteur de polymérisation, avec un catalyseur qui comprend les composants (A) et (B) ci-après, de façon à en permettre la polymérisation :
Composant (A) qui est un produit de contact des composants secondaires (i), (ii) et (iii) ci-après, mis en contact les uns avec les autres dans un solvant inerte, la concentration du composant secondaire (i) n'étant pas inférieure à 50 µM/litre :
le composant secondaire (i), qui est un composé d'un métal de transition représenté par la formule générale
Qₐ(C₅H_{5-a-b}R¹ _{b})(C₅H_{5-a-c}R² _{c})MeXY
ou
A_{d}(C₅H_{5-d-e}R³ ₑ)(R⁴ _{2-d}J)MeXY,
où chacun des fragments (C₅H_{5-a-b}R¹_{b}), (C₅H_{5-a-c}R²_{c}) et (C₅H_{5-d-e}R³ ₑ), représente un ligand cyclique à 5 chaînons, conjugué, qui se coordonne avec un métal Me, où R¹, R² et R³ représentent chacun un groupe monovalent choisi parmi l'ensemble comprenant les groupes hydrocarbonés ayant de 1 à 20 atomes de carbone, les groupes alcoxy ayant de 1 à 12 atomes de carbone, les groupes hydrocarbonés contenant du silicium et ayant de 1 à 24 atomes de carbone, les groupes hydrocarbonés phosphorés ayant de 1 à 18 atomes de carbone, les groupes hydrocarbonés azotés ayant de 1 à 18 atomes de carbone et les groupes hydrocarbonés contenant du bore et ayant de 1 à 18 atomes de carbone ; R⁴ représente un groupe monovalent constitué d'un groupe hydrocarboné ayant de 1 à 20 atomes de carbone, d'un groupe hydrocarboné contenant du silicium et ayant de 1 à 24 atomes de carbone, et d'un groupe hydrocarboné oxygéné ayant de 1 à 20 atomes de carbone, où R¹ et R² peuvent être identiques ou différents, ou encore les radicaux R¹, s'ils sont présents en plusieurs exemplaires, peuvent être identiques ou différents et peuvent, ou non, être liés au niveau de leur site terminal libre, et les radicaux R² (ou R³), s'ils sont présents en plusieurs exemplaires, peuvent être identiques ou différents, et peuvent, ou non, être liés les uns aux autres au niveau de leur site terminal libre ; Q représente un groupe pontant divalent qui assure la réticulation des deux ligands cycliques à 5 chaînons conjugués mentionnés ci-dessus ; A représente un groupe pontant divalent qui assure la réticulation des groupes indiqués, à savoir (C₅H_{5-d-e}R³) et (R⁴_{2-d}J), où J représente un atome d'azote ou de phosphore qui se lie à Me ; Me représente un métal de transition des groupes IVB-VIB du Tableau périodique ; X et Y, qui peuvent être identiques ou différents, représentent chacun un groupe monovalent constitué d'un atome d'hydrogène, d'un atome d'halogène, d'un groupe hydrocarboné ayant de 1 à 20 atomes de carbone, d'un groupe alcoxy ayant de 1 à 20 atomes de carbone, d'un groupe amino pouvant ou non être substitué par jusqu'à deux groupes hydrocarbonés ayant de 1 à 20 atomes de carbone, un groupe hydrocarboné contenant du phosphore et ayant de 1 à 20 atomes de carbone, et un groupe hydrocarboné contenant du silicium et ayant de 1 à 20 atomes de carbone ; a et d valent 0 ou 1 ; b, et c sont des entiers définis respectivement par 0 < b < 5 et 0 < c < 5 quand a vaut 0, et b et c sont des entiers définis respectivement par 0 < b < 4 et 0 < c < 4 quand a vaut 1, e est un entier défini par 0 < e < 5 quand d vaut 0 et un entier défini par 0 ≤ e ≤ 4 quand d vaut 1 ;
le composant secondaire (ii), qui est un acide de Lewis ; et
le composant secondaire (iii), qui est un composé organique de l'aluminium ; et
Composant (B), qui est un aluminoxane, le contact des composants secondaires (i), (ii) et (iii) étant mis en oeuvre dans un réacteur différent du réacteur de polymérisation pour former le composant (A), lequel est ensuite introduit dans le réacteur de polymérisation, où il est mis en contact avec le composant (B) pour former le catalyseur.

2. Procédé selon la revendication 1, dans lequel le composant secondaire (i) est un composé de formule :
Qₐ(C₅H_{5-a-b}R¹ _{b})(C₅H_{5-a-c}R² _{c} )MeXY
où a vaut 1, Q est un pont choisi parmi l'ensemble comprenant les groupes alkylène ayant jusqu'à 3 atomes de carbone dans la chaîne la plus courte et les groupes silylène ayant jusqu'à 3 atomes de silicium dans la chaîne la plus courte, Me est choisi parmi l'ensemble comprenant Ti, Zr et Hf, (C₅H_{5-a-b}R¹_{b}) et (C₅H_{5-a-c}R²_{c}) sont choisies parmi l'ensemble comprenant le groupe cyclopentadiényle, le groupe indényle, le groupe tétrahydroindényle, le groupe fluorényle et ces groupes substitués par au moins un groupe alkyle inférieur, et chacun des radicaux X et Y est choisi parmi l'ensemble comprenant les atomes d'halogène et les groupes hydrocarbonés ayant de 1 à 4 atomes de carbone.

3. Procédé selon la revendication 1, dans lequel le composant secondaire (i) est un composé de formule :
Qₐ(C₅H_{5-a-b}R¹ _{b})(C₅H_{5-a-c}R² _{c})MeXY
où a vaut 0, Me est choisi parmi l'ensemble comprenant Ti, Zr et Hf, (C₅H_{5-a-b}R¹ _{b}) et (C₅H_{5-a-c}R² _{c}) sont choisies parmi l'ensemble comprenant le groupe cyclopentadiényle, le groupe indényle, le groupe tétrahydroindényle, le groupe fluorényle et ces groupes substitués par au moins un groupe alkyle inférieur, et chacun des radicaux X et Y est choisi parmi l'ensemble comprenant les atomes d'halogène et les groupes hydrocarbonés ayant de 1 à 4 atomes de carbone.

4. Procédé selon la revendication 1, dans lequel le composant secondaire (i) est un composé de formule :
A_{d}(C₅H_{5-d-e}R³ ₑ)(R⁴ _{2-d}J)MeXY
où d vaut 1, R⁴ est un groupe hydrocarboné monovalent ayant de 1 à 12 atomes de carbone ; J est un atome d'azote ou de phosphore ; Me est choisi parmi l'ensemble comprenant Ti, Zr et Hf ; (C₅H_{5-d-e}R³ₑ) est choisi parmi l'ensemble comprenant le groupe cyclopentadiényle, le groupe indényle, le groupe tétrahydroindényle, le groupe fluorényle et ces groupes substitués par au moins un groupe alkyle inférieur ; A est un pont choisi parmi l'ensemble comprenant les groupes alkylène ayant jusqu'à 3 atomes de carbone dans la chaîne la plus courte et les groupes silylène ayant jusqu'à 3 atomes de silicium dans la chaîne la plus courte, et chacun des radicaux X et Y est choisi parmi l'ensemble comprenant les atomes d'halogène et les groupes hydrocarbonés ayant de 1 à 4 atomes de carbone.

5. Procédé selon la revendication 1, dans lequel le composant secondaire (ii) est un arylbore.

6. Procédé selon la revendication 5, dans lequel l'arylbore est un fluorophénylbore.

7. Procédé selon la revendication 5, dans lequel l'arylbore est le tris(pentafluorophényl)bore.

8. Procédé selon la revendication 1, dans lequel le composant secondaire (iii) est choisi parmi les trialkylaluminiums et les aluminoxanes, et le composant secondaire (ii) est un arylbore.

9. Procédé selon la revendication 8, dans lequel le composant secondaire (iii) est un trialkylaluminium.

10. Procédé selon la revendication 1, dans lequel le composant (A) et le composant (B) sont utilisés selon un rapport en atomes compris dans l'intervalle de 0,1 à 3000 entre les atomes d'aluminium de l'aluminoxane du composant (B) et les atomes métalliques du composé d'un métal de transition du composant (A), à savoir Al/Me.

11. Procédé selon la revendication 2, dans lequel le polymère d'a-oléfine est choisi parmi l'ensemble comprenant les homopolymères du propylène et les copolymères du propylène et d'une oléfine autre que le propylène selon une proportion allant jusqu'à 30 % en poids par rapport au propylène.

12. Procédé selon la revendication 1, dans lequel le composant secondaire (iii) est choisi parmi l'ensemble comprenant les trialkylaluminiums et les aluminoxanes, le composé secondaire (ii) est un arylbore, et le composant (A) et le composant (B) sont utilisés selon un rapport en atomes de 0,1 à 3000 entre les atomes d'aluminium de l'aluminoxane du composant (B) et les atomes métalliques du composé d'un métal de transition du composant (A), à savoir Al/Me.
